Europäisches Patentamt

European Patent Office

Office européen des brevets

(11) Veröffentlichungsnummer : **0 064 228**
**B1**

# (12) EUROPÄISCHE PATENTSCHRIFT

(45) Veröffentlichungstag der Patentschrift :
21.03.84

(21) Anmeldenummer : 82103402.2

(22) Anmeldetag. : 22.04.82

(51) Int. Cl.³ : **C 09 D 3/81, C 08 L 33/06**

(54) Bindemittel für schwerentflammbare Beschichtungen, Anstriche und Putze.

(30) Priorität : 02.05.81 DE 3117370

(43) Veröffentlichungstag der Anmeldung :
10.11.82 Patentblatt 82/45

(45) Bekanntmachung des Hinweises auf die Patenterteilung : 21.03.84 Patentblatt 84/12

(84) Benannte Vertragsstaaten :
AT BE CH DE FR IT LI NL SE

(56) Entgegenhaltungen :
GB-A- 955 481

(73) Patentinhaber : BASF Aktiengesellschaft
Carl-Bosch-Strasse 38
D-6700 Ludwigshafen (DE)

(72) Erfinder : Florus, Gerhard, Dr.
Otto-Dill-Strasse 22
D-6700 Ludwigshafen (DE).
Erfinder : Kerckow, Albrecht, Dr.
In den Weingaerten 3
D-6706 Wachenheim (DE)
Erfinder : Wistuba, Eckehardt, Dr.
Im Obergarten 7
D-6702 Bad Duerkheim (DE)
Erfinder : Wolf, Hans, Dr.
Dubliner Strasse 1
D-6700 Ludwigshafen (DE)

# 0 064 228

## Bindemittel für schwerentflammbare Beschichtungen, Anstriche und Putze

Die Wärmedämmung von Gebäudefassaden erfolgt heute in großem Umfang durch Aufbringen von Wärmedämmplatten, z. B. von Polystyrol-Hartschaumplatten, die dann mit einer Dünnschicht- bzw. Spachtelmasse, Armierungsgewebe und Kunststoffputz beschichtet werden. Fassadenfarben und kunstharzgebundene Putze werden dabei bevorzugt mit Bindemitteln auf Basis von wäßrigen Polyacrylat-Dispersionen hergestellt, da hiermit qualitativ besonders hochwertige Produkte erhalten werden. Bei den Polyacrylaten handelt es sich dabei insbesondere um wäßrige Dispersionen von Acrylester-Styrol-Copolymerisaten sowie ferner um wäßrige Dispersionen von Acrylester-Methacrylsäuremethylester-Copolymerisaten. Fassadenfarben und Putze, die mit derartigen Bindemitteln hergestellt sind, weisen besonders hohe Wasserfestigkeit, hohe Verseifungsfestigkeit und ausgezeichnete Wetterbeständigkeit auf. In diesen Eigenschaften werden die Bindemittel bzw. die daraus hergestellten Produkte von anderen Produktklassen, z. B. von Vinylester-Copolymerisaten nicht erreicht. Andererseits können Fassadenfarben und Putze unter Verwendung von Vinylester-Copolymerisat-Dispersionen oder Ethylen-Vinylchlorid-Copolymerisat-Dispersionen, die eine verhältnismäßig hohe Wasseraufnahme aufweisen und verhältnismäßig leicht verseifbar sind, hergestellt werden, die flammwidrig sind und, wenn sie auf Schaumpolystyrolplatten aufgebracht sind, die Forderung nach Schwerentflammbarkeit nach DIN 4102 erfüllen, die mit den Bindemitteln auf Polyacrylatbasis bis heute nicht erreicht werden können (die Forderung nach Schwerentglammbarkeit nach DIN 4102 bedeutet eine Mindestrestlänge einer zunächst 100 cm langen Probe von 15 cm und eine Rauchgastemperatur von höchstens 200 °C des vollständigen Vollwärmeschutzsystems). Die als Bindemittel für die Kleber, Putze und Anstrichstoffe eingesetzten Polymerisat-Dispersionen haben MFT-Werte die im allgemeinen von 0 bis 30 °C betragen (MFT bedeutet die minimale Filmbildetemperatur, d. h. die Temperatur unterhalb der eine Filmbildung aus der Dispersion nicht mehr erfolgt). Wäßrige Dispersionen von Polyvinylchlorid oder Polyvinylidenchlorid können als Bindemittel für derartige Beschichtungsstoffe nicht für sich eingesetzt werden, da sie bei Temperaturen von 0 bis 30 °C nicht verfilmen. Sie weisen jedoch ein günstiges Brandverhalten auf.

Der vorliegenden Erfindung liegt nun die Aufgabe zugrunde, Bindemittel zur Verfügung zu stellen, die transparente, glänzende, schwerentflammbare und lichtechte Filme liefern, und die für die Herstellung wasserfester, witterungsbeständiger, verschmutzungsresistenter und schwerentflammbarer Beschichtungen, wie Putze, Kleber und Anstrichstoffe geeignet sind, die insbesondere für die Beschichtung von Wärmedämmplatten bei der Isolierung von Gebäuden eingesetzt werden können.

Es wurde nun gefunden, daß Bindemittel aus

A) mindestens einer wäßrigen (Meth)acrylsäurealkylester-Copolymerisat-Dispersion einer MFT von − 20 bis + 30 °C und

B) mindestens einer wäßrigen Dispersion eines Polymerisats, das mindestens 70 % seines Gewichts Vinyl und/oder Vinylidenchlorid einpolymerisiert enthält, die eine MFT von mindestens 50 °C hat, besonders gut für schwerentflammbare Beschichtungen, Anstriche und Putze geeignet sind, bei denen die (Meth)acrylsäurealkylester-Copolymerisate der Komponente A) einen mittleren Teilchendurchmesser von 0,01 bis 0,5 μm haben und in einer Menge von mindestens 60 Gew.-%, bezogen auf die gesamte Polymerisatmenge der Komponente A) und B) vorliegen, die Polymerisate der Komponente B) einen mittleren Teilchendurchmesser von 0,05 bis 0,5 μm haben, und das molare Verhältnis von chemisch gebundenem Sauerstoff zu chemisch gebundenem Chlor in den Polymerisaten A) und B) von 1 : 0,2 bis 4,3 beträgt.

Die als Komponente A) geeigneten wäßrigen (Meth)acrylsäurealkylester-Copolymerisat-Dispersionen einer MFT von − 20 bis + 30 °C enthalten Copolymerisate eines mittleren Teilchendurchmessers von 0,01 bis 0,5 μm, die im allgemeinen mindestens 30 %, bezogen auf des Polymerisat, an (Meth)acrylsäurealkylestern einpolymerisiert enthalten, die sich im allgemeinen von 1 bis 12 C-Atome enthaltenden Alkanolen, insbesondere von 1 bis 4 C-Atome enthaltenden Alkanolen, wie Methanol, Ethanol, Isopropanol, n-Butanol und/oder Isobutanol, ableiten. Von besonderem Interesse sind Copolymerisate des Methacrylsäuremethylesters, des Acrylsäure-n-butylesters und des Acrylsäure-isobutylesters. Die Copolymerisate können auch untergeordnete Mengen an 2-Ethylhexylacrylat einpolymerisiert enthalten. Als Comonomere kommen auch in Mengen bis zu 70 Gew.-% Vinylester, wie Vinylacetat und Vinylpropionat, und/oder insbesondere Styrol, sowie gegebenenfalls bis zu 20 Gew.-% Acrylnitril und/oder Vinylchlorid sowie in Mengen bis etwa 10 Gew.-% meist 3 bis 5 C-Atome enthaltende $\alpha$, $\beta$-monoolefinisch ungesättigte Mono- und/oder Dicarbonsäuren, wie Acrylsäure, Methacrylsäure, Itaconsäure oder Maleinsäure und/oder deren gegebenenfalls an den Stickstoffatomen durch Methylolgruppen substituierte Amide, wie Acrylamid, Methacrylamid, N-Methylacrylamid, N-Methylmethacrylamid, N-Methylolacrylamid und -methacrylamid, Maleinsäureimid, sowie Maleinsäuremonoethylester in Frage. Von besonderem Interesse sind Dispersionen von Copolymerisaten aus 40 bis 60 % ihres Gewichts n-Butylacrylat und/oder Isobutylacrylat, 40 bis 60 % ihres Gewichts Styrol, 1 bis 5 % ihres Gewichts Acryl- und/oder Methacrylsäure und 1 bis 2 % ihres Gewichts Acryl- und/oder Methacrylamid. Derartige Copolymerisate haben vorzugsweise eine MFT von 0 bis 20 °C und sind im Handel erhältlich. Sie können in an sich üblicher Weise hergestellt sein und ionische oder nichtionische Emulgatoren und/oder Schutzkolloide sowie gegebenenfalls weitere Hilfsstoffe enthalten. Die Dispersionen weisen meist Feststoffgehalte von 20 bis 60, insbesondere von 40 bis 55 Gew.-% auf, und die K-Werte der Copolymerisate, gemessen nach DIN 53726 in Tetrahydrofuran betragen 35 bis 90. Der bevorzugte Teilchengrößenbereich beträgt 0,05 bis 0,25 µm, und die Viskositäten der 50 %igen Dispersionen betragen meist 3 000 bis 100 mPa · s, vorzugsweise 2 000 bis 1 000.

Als Komponente B) sind wäßrige Dispersionen von Polymerisaten, die mindestens 70 % ihres Gewichts Vinyl- und/oder Vinylidenchlorid einpolymerisiert enthalten und die eine MFT von mindestens 50 °C haben, geeignet, wie sie im handel erhältlich sind. Geeignet sind z. B. übliche wäßrige Dispersionen von Homopolymerisaten des Vinylchlorids oder Copolymerisate des Vinylchlorids mit Vinylacetat und/oder (Meth)acrylsäurealkylestern, die mehr als 70 Gew.-% Vinylchlorid einpolymerisiert enthalten. Als (Meth)acrylsäurealkylester kommen dabei die für die Komponente A) genannten Ester der Acrylsäure und/oder Methacrylsäure in Frage, insbesondere Acrylsäuremethylester und Acrylsäure-n-butylester. Wäßrige Dispersionen von Vinylidenchlorid-Copolymerisaten sollen gleichfalls mindestens 70 % ihres Gewichts an Vinylidenchlorid einpolymerisiert enthalten. Als Comonomere kommen hierfür vor allem Methylacrylat und Acrylnitril in Frage. Die geeigneten wäßrigen Dispersionen der Vinylchlorid und/oder -Vinylidenchlorid-Copolymerisate haben meist Feststoffgehalte von 30 bis 60 Gew.-%, insbesondere von 40 bis 55 Gew.-% und die K-Werte der Polymerisate betragen meist 40 bis 120, die Viskositäten der 50 %igen Dispersionen 5 bis 500 mPa · s. Sie können gleichfalls in an sich üblicher Weise unter Verwendung der üblichen ionischen oder nichtionischen Emulgatoren und gegebenenfalls von Schutzkolloiden, wie Hydroxyethylcellulose, und/oder wasserlöslichen hochmolekularen Stoffen, wie Polyacrylamiden mit K-Werten von 50 bis 250 oder Polyacrylsäuresalzen, hergestellt sein. Schließlich können sie, bezogen auf 100 Teile der Vinylchlorid bzw. Vinylidenchlorid-Polymerisate 10 Teile Lösungsmittel, wie Ethylenglykole, Aminoalkohole, wie Ethanolamin oder n-Methylpyrrolidon, n-Butylglykol, Testbenzin, Xylol, Butylacetat, Benzylalkohol oder Chlorparaffine und 0 bis 3 Gewichtsteile Ammoniak und/oder andere stickstoffhaltige Verbindungen, wie Triethylamin enthalten. Der mittlere Teilchendurchmesser der Komponente B) liegt vorzugsweise zwischen 0,1 und 0,3 µm.

Die Komponente A) liegt im Gemisch mit der Komponente B) im allgemeinen in einer Menge von mindestens 60 Gew.-%, bezogen auf die Polymerisate A) und B) vor, wobei das molare Verhältnis von chemisch gebundenem Sauerstoff zu chemisch gebundenem Chlor in den Polymerisaten A) und B) von 1 : 0,2 bis 4,3 beträgt. Werden dabei solche Polymerisate A) eingesetzt, die Styrol einpolymerisiert enthalten, so liegt das molare Verhältnis von chemisch gebundenem Sauerstoff zu chemisch gebundenem Chlor in den Polymerisate A) und B) vorzugsweise im Bereich von 1 : 1 bis 4,3 ; werden dagegen als Komponente A) Acrylat- bzw. Acrylatvinylester-Copolymerisate eingesetzt so liegt dieses Verhältnis vorzugsweise im Bereich von 1 : 0,22 bis 1,3.

Die erfindungsgemäßen Bindemittel können durch einfaches Vermischen der Komponenten, das im allgemeinen bei Raumtemperatur unter Rühren erfolgen kann, hergestellt werden. Die Bindemittel können insbesondere für schwer entflammbare Kleber, Putze und Anstrichstoffe, die bei Vollwärmeschutzsystemen eingesetzt werden sollen, verwendet werden. Dabei können weitere flammhemmende Stoffe, z. B. Aluminiumhydroxid, Zinkborat, Polyphosphate, Antimontrioxid sowie Bromverbindungen, wie Dekabromdiphenyloxid oder organische Phosphorsäureester sowie gegebenenfalls hydrophobiertes Natriumhydrogencarbonat zugesetzt werden.

Die in den folgenden Beispielen angegebenen Teile und Prozente beziehen sich auf das Gewicht. Die darin angegebenen Gelbwerte wurden nach DIN 6167 — Meßdauer 600 Stunden — bestimmt. Die darin angegebenen Prüfungen wurden nach DIN 53230 bewertet. Die MFT wurde in Anlehnung an DIN 53787 bestimmt, die Pendelhärte nach König (DIN 53157).

Beispiel 1

Zu 725 Teilen einer wäßrigen Dispersion eines Copolymerisats aus 50 Teilen Styrol, 50 Teilen n-Butylacrylat, 1,5 Teilen Acrylamid und 2,5 Teilen Acrylsäure, die eine Viskosität von 1.600 mPa · s, den pH-Wert 8,0 und einen mittleren Teilchendurchmesser von 0,2 µm bei einem Feststoffgehalt von 50 Gew.-% hat (Komponente A) werden unter Rühren bei Raumtemperatur 275 Teile einer wäßrigen Polyvinylchlorid-Dispersion (Komponente B) der Viskosität 7,25 mPa · s, pH-Wert 5,5, mittlerer Teilchendurchmesser 0,3 µm und einem Feststoffgehalt von 50 % gegeben. Man erhält ein Bindemittel in dem das molare Verhältnis von chemisch gebundenem Sauerstoff zu chemisch gebundenem Chlor in den Komponenten A) und B) 1 : 1,7 beträgt. Die mit diesem erfindungsgemäßen Bindemittel erhaltenen Prüfdaten sind in der folgenden Tabelle 1 angegeben. In dieser Tabelle sind zum Vergleich auch die Prüfdaten für die Komponenten A) und B) getrennt sowie zusätzlich für eine wäßrige Dispersion eines Copolymerisats aus 60 Teilen Vinylacetat, 25 Teilen Vinylchlorid und 15 Teilen Ethylen zusammengestellt.

(Siehe Tabelle 1 Seite 4 f.)

Tabelle 1

|  | Beispiel 1 | Komp. A | Komp. B | Terpoly-merisat |
|---|---|---|---|---|
| Festgehalt (%) | 50 | 50 | 50 | 50 |
| Viskosität (mPa.s) | 500 | 1600 | 725 | 1800 |
| Lagerstabilität | 3 Monate | 3 Monate | 1 Woche[1] | 3 Monate |
| Wasseraufnahme des Films (Gew.-% Wasser) | 7,4 | 9,6 | [2] | 20 |
| Trübung (Film auf Glas) | 2 | 1 | 2[3] | 1-2 |
| Gelbwert | 0,28 | 0,55 | [2] | 20,3[4] |
| Reißkraft des Film (N/mm², Normalklima) | 8,1 | 7,8 | 0 | 4,8 |
| MFT in (°C) | 18 | 18 | 100 | 4 |
| Pendelhärte | 42 | 33 | [2] | 7 |

[1] Sedimentiert
[2] Nicht meßbar; PVC-Disp. verfilmt nicht bei Raumtemperatur
[3] Es bildet sich verkrustetes, weißes Pulver
[4] Oberfläche stark klebrig

Beispiel 2

Zu 725 Teilen einer wäßrigen Dispersion eines Copolymerisats aus 30 Teilen Styrol, 70 Teilen n-Butylacrylat, 1,5 Teilen Acrylamid und 2,5 Teilen Acrylsäure, die eine Viskosität von 1.800 mPa · s, den PH-Wert 8,5 und einen mittleren Teilchendurchmesser von 0,2 μm bei einem Feststoffgehalt von 50 Gew.-% hat (Komponente A) werden unter Rühren bei Raumtemperatur 225 Teile einer wäßrigen Polyvinylchlorid-Dispersion (Komponente B) der Viskosität 7,25 mPa · s, des pH-Werts 5,5, des mittleren Teilchendurchmessers 0,3 μm und des Feststoffgehalts 50 % gegeben. Man erhält ein Bindemittel in dem das molare Verhältnis von chemisch gebundenem Sauerstoff zu chemisch gebundenem Chlor der Komponenten A) und B) 1 : 1,2 beträgt.

Anwendungstechnische Beispiele und Vergleichsversuche

(I) Mit dem Bindemittel von Beispiel 1 :

Mit dem in Beispiel 1 angegebenen Bindemittel sowie der hierfür eingesetzten Komponente A) und den zum Vergleich dort angegebenen Terpolymerisat werden nach den in Tabelle 2 angegebenen Rezepten ein Kleber (Spachtelmasse) und ein Spachtelputz hergestellt und diese zur Herstellung von Vollwärmeschutz-Prüfkörpern verwendet, die folgenden Aufbau aufweisen :

Aufbau der Prüfkörper

Asbestzementplatte 100 × 19 × 0,5 cm
Kleber 2 kg/m²
Polystyrolschaumstoffplatte 4 cm dick,
Dichte 0,015 g/cm³ (PS 15 SE)
Spachtelmasse 4 kg/m²
Glasseidengittergewebe 4 mm Fadenabstand
Spachtelputz ca. 3 kg/m²

An den Prüfkörpern wird der Brandschachttest nach DIN 4102, der Frost-Tautest und eine einjährige Außenbewitterung zur Prüfung auf Verschmutzung durchgeführt. Die dabei erhaltenen Ergebnisse sind in der angefügten Tabelle 3 zusammengestellt.

Frost-Tautest : Ein Wechsel bedeutet, der Prüfkörper wird 16 Stunden im Wasserbad bei − 20 °C eingefroren, 1 Stunde bei + 23 °C aufgetaut, 3 Stunden bei Raumtemperatur getrocknet und 4 Stunden im Wasserbad bei + 23 °C gehalten. Der Test in 25 derartigen Wechseln.

(Siehe Tabellen 2 und 3 Seite 6 ff.)

Tabelle 2

Rezeptaufbau für

|  | Beispiel | Vergleichs-versuch | Vergleichs-versuch |
|---|---|---|---|
| Kleber (Spachtelmasse) | 1K | AK | TK |
| Bindemittel aus Beispiel 1 | 189 | - | - |
| Bindemittel Komponente A | - | 140 | - |
| Bindemittel Terpolymerisat | - | - | 140 |
| Testbenzin | 1 | wie | wie |
| Konservierungsmittel | 1 | Beispiel | Beispiel |
| Methylcallulose 2 % in Wasser | 44 | 1K | 1K |
| Polyacrylsäure mit $NH_3$ neutr. 1 % in Wasser | 100 | | |
| Kreide | 110 | | |
| Quarzsand ca. 60 % 0,3 mm | 604 | | |
| Spachtelputz | 1S | AS | TS |
| Bindemittel am Beispiel 1 | 172,8 | - | - |
| Bindemittel Komponente A | - | 128 | - |
| Bindemittel Terpolymerisat | - | - | 128 |
| Testbenzin | 50 | | |
| Methylcellulose 3 % in Wasser | 21 | | |
| Tetrakaliumpyrophosphat 50%ig | 4,6 | wie | wie |
| Konservierungsmittel | 2,5 | Beispiel | Beispiel |
| Titandioxid | 32 | 1S | 1S |
| Antimontrioxid | 6,4 | | |
| Calcium-Magnesiumcarbonat 4 :1 40 μm : 130 μm | 419,2 | | |
| Magnesiumsilikat | 89,5 | | |
| Weißgranulat 1,2-1,8 mm | 230 | | |
| Entschäumer 1 : 1 in Diisobutyladipinsäureester | 3,8 | | |
| Paraffinwachsemulsion 50%ig | 2,5 | | |

0 064 228

## Tabelle 3

Prüfergebnisse bei Vollwärmeschutz-Prüfkörpern

| | | Beispiel 1 | Vergleichs-versuch A | Vergleichs-versuch T |
|---|---|---|---|---|
| Brandschachttest (mittlere unzersetzte Rest-länge [1]) | | 24 cm | 0 | 34 cm |
| mittlere Rauchgastemperatur [2] | | 186°C | 200°C | 178°C |
| Frost-Tau-Test 25 Wechsel | | ohne Befund | ohne Befund | ohne Befund |
| Außenbewitterung 1 Jahr., Vermutzung | | gering | gering | stark |

[1] Mindestforderung 15 cm
[2] Mindestforderung 200 °C

0 064 228

(II) Mit dem Bindemittel von Beispiel 2 :

Mit dem in Beispiel 2 angegebenen Bindemittel werden nach den in Tabelle 2 angegebenen Rezepten ein Kleber (Spachtelmasse) und ein Spachtelputz hergestellt und diese zur Herstellung eines Vollwärmeschutz-Prüfkörpers gemäß den Angaben im anmeldungstechnischen Beispiel (I) eingesetzt. An dem Prüfkörper wird der Brandschachttest nach DIN 4102 durchgeführt und dabei eine mittlere unzersetzte Restlänge von 32 cm und eine mittlere Rauchgastemperatur von 160 °C gemessen.

(III) Mit den Bindemitteln von Beispiel 1 und 2 :

Nach den Angaben in Beispiel I wird ein Vollwärmeschutz-Prüfkörper hergestellt, bei dem jedoch Kleber und Spachtelmasse unter Verwendung des in Beispiel 2 beschriebenen Bindemittels, der Spachtelputz unter Verwendung des in Beispiel 1 angegebenen Bindemittels gemäß den Angaben in Tabelle 2 mit der Maßgabe hergestellt waren, daß der Spachtelputz kein Antimontrioxid, einen CalciumMagnesiumcarbonat-Gehalt von nur 265,1 Teilen und zusätzlich 154,1 Teile Aluminiumhydroxid (Hydargillit) einer Teilchengröße von 10 µm enthält.

Bei dem Brandschachttest nach DIN 4102 wird dann eine mittlere unzersetzte Restlänge von 38 cm und eine mittlere Rauchgastemperatur von 165 °C gemessen.

(IV) Mit den Bindemitteln von Beispiel 1 und 2 unter Zusatz von hydrophobiertem Natriumhydrogencarbonat :

Entsprechend den Angaben in dem anwendungstechnischen Beispiel I wird ein VollwärmeschutzPrüfkörper mit folgender Maßgabe hergestellt :

Kleber und Spachtelmasse entsprechen denen des anwendungstechnischen Beispiels III und sind unter Verwendung des in Beispiel 2 angegebenen Bindemittels hergestellt.

Für die Herstellung des Spachtelputzes wird folgende Rezeptur angewandt :

| | |
|---|---|
| Bindemittel von Beispiel 1 | 110 Teile |
| Testbenzin | 6 Teile |
| Methylcellulose 4 %ig in Wasser | 25 Teile |
| Polyacrylsäure, Ammoniumsalz, 2 %ig in Wasser | 60 Teile |
| Kreide | 120 Teile |
| Quarzsand | 679 Teile |

Hierzu fügt man ein Gemisch aus 0,28 Teilen Natriumpolyphosphat, 113,65 Teilen Wasser und 286 Teilen hydrophobiertem Natriumhydrogencarbonat (das Natriumhydrogencarbonat ist mit 3 % seines Gewichts an Stearinsäure überzogen, das durch Aufsprühen einer 10 %igen Lösung der Stearinsäure in Aceton auf erhitztes Natriumhydrogencarbonat und Abdampfen des restlichen Acetons hergestellt ist).

Als Spachtelputz für die Herstellung der Prüfkörper, wird eine Masse eingesetzt, wie sie im anwendungstechnischen Beispiel I als Spachtelputz angegeben ist.

Bei der Prüfung der Prüfkörper im Brandschachttest nach DIN 4102 wird eine mittlere unzersetzte Restlänge von 39 cm und eine mittlere Rauchgastemperatur von 145 °C gemessen.

**Ansprüche**

1. Bindemittel für schwerentflammbare Beschichtungen, Anstriche und Putze, bestehend aus
A) mindestens einer wäßrigen (Meth)acrylsäurealkylester-Copolymerisat-Dispersion einer MFT von − 20 bis + 30 °C und
B) mindestens einer wäßrigen Dispersion eines Polymerisats, das mindestens 70 % seines Gewichts Vinyl- und/oder Vinylidenchlorid einpolymerisiert enthält, die eine MFT von mindestens 50 °C hat, wobei die (Meth)acrylsäurealkylester-Copolymerisate der Komponente A) einen mittleren Teilchendurchmesser von 0,01 bis 0,5 µm haben und in einer Menge von mindestens 60 Gew.-%, bezogen auf die gesamte Polymerisatmenge der Komponente A) und B) vorliegen, die Polymerisate der Komponente B) einen mittleren Teilchendurchmesser von 0,05 bis 0,5 µm haben und das molare Verhältnis von chemisch gebundenem Sauerstoff zu chemisch gebundenem Chlor in den Polymerisaten A) und B) von 1 : 0,22 bis 4,3 beträgt.

2. Bindemittel nach Anspruch 1, dadurch gekennzeichnet, daß das Copolymerisat der Komponente A) mindestens 30 % seines Gewichts (Meth)acrylsäureester von 1 bis 12 C-Atome aufweisenden Alkanolen bis zu 70 % seines Gewichts Vinylester und/oder Styrol, bis zu 20 % seines Gewichts Acrylnitril und/oder Vinylchlorid und bis zu 10 % seines Gewichts 3 bis 5 C-Atome enthaltende α,β-monoolefinisch ungesättigte Mono- und/oder Dicarbonsäuren und/oder deren gegebenenfalls an den Stickstoffatomen durch Methylolgruppen substituierte Amide einpolymerisiert enthält.

3. Bindemittel nach Anspruch 1, dadurch gekennzeichnet, daß das Copolymerisat der Komponente A)

40 bis 60 % seines Gewichts n-Butyl- und/oder Isobutylacrylat,
40 bis 60 % seines Gewichts Styrol,
1 bis 5 % seines Gewichts Acryl- und/oder Methacrylsäure und
1 bis 2 % seines Gewichts Acryl- und/oder Methacrylamid

einpolymerisiert enthält.

## Claims

1. A binder for flame-retardant coatings, finishes and renders, which comprises

A) One or more aqueous alkyl (meth)acrylate copolymer dispersions with an MFT of from − 20 to + 30 °C, and

B) one or more aqueous dispersions, having an MFT of not less than 50 °C, of a polymer containing not less than 70 % by weight of vinyl chloride and/or vinylidene chloride as polymerized units, and in which the alkyl (meth)acrylate copolymer of component A) has a mean particle diameter of from 0.01 to 0.5 μm and is present in an amount of not less than 60 % by weight, based on the total amount of polymers in components A) and B), the polymer of component B) has a mean particle diameter of from 0.05 to 0.5 μm, and the molar ratio of chemically bonded oxygen to chemically bonded chlorine in the polymers A) and B) is from 1 : 0.22 to 1 : 4.3.

2. A binder as claimed in claim 1, wherein the copolymer of component A) contains, as copolymerized units, not less than 30 % by weight of (meth)acrylates of alkanols of 1 to 12 carbon atoms, not more than 70 % by weight of vinyl esters and/or styrene, not more than 20 % by weight of acrylonitrile and/or vinyl chloride and not more than 10 % by weight of α,β-monoolefinically unsaturated monocarboxylic and/or dicarboxylic acids of 3 to 5 carbon atoms, and/or their amides which are unsubstituted or substituted at the nitrogen atoms by methylol groups.

3. A binder as claimed in claim 1, wherein the copolymer of component A) contains, as copolymerized units,

from 40 to 60 % by weight of n-butyl acrylate and/or isobutyl acrylate,
from 40 to 60 % by weight of styrene,
from 1 to 5 % by weight of acrylic acid and/or methacrylic acid, and
from 1 to 2 % by weight of acrylamide and/or methacrylamide.

## Revendications

1. Liant pour revêtements, peintures et enduits difficilement inflammables, composé de

A) au moins une dispersion aqueuse d'un copolymère d'un (méth)acrylate d'alkyle avec une TFM de − 20 à + 30 °C et

B) au moins une dispersion aqueuse d'un polymère, dans lequel sont copolymérisés, à raison d'au moins 70 % de son poids, du chlorure de vinyle et(ou) du chlorure de vinylidène, cette dispersion possédant une TFM d'au moins 50 °C,
les copolymères de (méth)acrylate d'alkyle du composant (A) possédant une granulométrie moyenne de 0,01 à 0,5 μm et constituant au moins 60 % du poids total du polymère des composants A) et B), et les polymères du composant B) possédant une granulométrie moyenne de 0,05 à 0,5 μm, le rapport molaire de l'oxygène lié chimiquement au chlore lié chimiquement dans les polymères A) et B) étant compris entre 1 : 0,22 et 1 : 4,3.

2. Liant suivant la revendication 1, caractérisé en ce que le copolymère du composant A) contient en liaison polymère au moins 30 % de son poids de (méth)acrylates d'alcanols en $C_1$ à $C_{12}$, jusqu'à 70 % de son poids d'ester vinylique et(ou) de styrène, jusqu'à 20 % de son poids d'acrylo-nitrile et(ou) de chlorure de vinyle et jusqu'à 10 % de son poids d'acides mono- et(ou) di-carboxyliques en $C_3$ à $C_5$ à insaturation α, β-mono-oléfinique et(ou) d'amides de ces acides, éventuellement substitués sur les atomes d'azote par des groupes méthylol.

3. Liant suivant la revendication 1, caractérisé en ce que le copolymère du composant A) contient en liaison polymère (pourcentages en poids) :

40 à 60 % d'acrylate de n-butyle et(ou) d'isobutyle
40 à 60 % de styrène
1 à 5 % d'acide acrylique et(ou) méthacrylique et
1 à 2 % d'amide acrylique et(ou) méthacrylique.